# EUROPÄISCHE PATENTSCHRIFT

(11) **EP 2 753 841 B1**
(45) Veröffentlichungstag und Bekanntmachung des Hinweises auf die Patenterteilung: **14.10.2015**
(21) Anmeldenummer: 12758994.3
(22) Anmeldetag: 10.08.2012
(51) Int. Cl.: F16D 23/12

(54) **KUPPLUNGSVORRICHTUNG**
CLUTCH DEVICE
DISPOSITIF À EMBRAYAGE

(30) Priorität: 05.09.2011 DE 102011082115
(43) Veröffentlichungstag der Anmeldung: 16.07.2014
(73) Patentinhaber: Schaeffler Technologies AG & Co. KG, 91074 Herzogenaurach (DE)
(72) Erfinder: MEINHARD, Rolf, 77815 Bühl (DE); BOROWSKI, Marco, 77830 Bühlertal (DE); JOST, Markus, 77815 Bühl (DE)
(86) Internationale Anmeldenummer: PCT/DE2012/000807
(87) Internationale Veröffentlichungsnummer: WO 2013/034122

(56) Entgegenhaltungen:
- DE-A1-102005 007 967
- DE-A1-102009 042 829
- DE-A1-102010 024 927

## Beschreibung

Die vorliegende Erfindung betrifft eine Kupplungsvorrichtung, insbesondere eine Reibungskupplung, insbesondere für einen Antriebsstrang eines Kraftfahrzeugs.

In DE 10 2011 104 412 ist eine Kupplungsvorrichtung mit einer Gegendruckplatte und einer durch eine Flaschenzugeinrichtung in axialer Richtung der Kupplungsvorrichtung begrenzt verlagerbare Anpressplatte zur reibschlüssigen Klemmung einer Kupplungsscheibe zwischen der Anpressplatte und der Gegendruckplatte offenbart. Die Flaschenzugeinrichtung weist mehrere Zugmittel auf, die jeweils über mehrere anpressplattenseitige Umlenkrollen und mehrere gegendruckplattenseitige Umlenkrollen geführt sind. Ein freies Ende jedes Zugmittels ist an der Gegendruckplatte der Kupplungsvorrichtung befestigt. Durch unterschiedliche Reibung an den Zugmitteln können unterschiedliche Zugkräfte entstehen.

Das weitere Dokument DE 10 2005 007 967 offenbart den Oberbegriff von Anspruch 1.

Es ist Aufgabe der vorliegenden Erfindung, eine Kupplungsvorrichtung mit einer Flaschenzugeinrichtung anzugeben, bei der unterschiedliche Zugkräfte auf einfache Art und Weise ausgeglichen werden können.

Erfindungsgemäß gelöst wird diese Aufgabe durch eine Kupplungsvorrichtung gemäß Patentanspruch 1 mit einer Gegendruckplatte und einer durch zumindest eine Flaschenzugeinrichtung in axialer Richtung der Kupplungsvorrichtung begrenzt verlagerbare Anpressplatte zur reibschlüssigen Klemmung einer Kupplungsscheibe zwischen der Anpressplatte und der Gegendruckplatte, wobei die Flaschenzugeinrichtung zumindest ein erstes Zugmittel aufweist, das über zumindest eine anpressplattenseitige Umlenkrolle, zumindest eine gegendruckplattenseitige Umlenkrolle und zumindest eine verlagerbare Zugrolle geführt ist. Insbesondere handelt es sich bei der Kupplungsvorrichtung um eine Reibungskupplung. Die Kupplungsvorrichtung ist insbesondere für einen Antriebsstrang eines Kraftfahrzeugs geeignet. Da das erste Zugmittel als geschlossener Zug ausgebildet ist, können unterschiedliche Zugkräfte, die in einzelnen Teilabschnitten des Zugmittels aufgrund unterschiedlicher Reibung auftreten, auf einfache Art und Weise ausgeglichen werden.

Bevorzugte Ausführungsbeispiele in der vorliegenden Erfindung sind in den abhängigen Ansprüchen dargelegt.

Bei der Kupplungsvorrichtung kann es sich einerseits um eine Einfachkupplung handeln, die eine Gegendruckplatte, eine Kupplungsscheibe und eine Anpressplatte aufweist. In diesem Zusammenhang kann die Gegendruckplatte insbesondere als Sekundärmasse eines Zweimassenschwungrads ausgebildet sein. Andererseits kann es sich bei der Kupplungsvorrichtung auch um eine Mehrfachkupplung, insbesondere um eine Doppelkupplung, handeln. Insbesondere ist es von Vorteil, wenn beide Teilkupplungen der Doppelkupplung jeweils eine Flaschenzugeinrichtung aufweisen.

Bei Doppelkupplungen mit Drei-Platten-Aufbau weist die eine Teilkupplung der Doppelkupplung eine Anpressplatte und eine Kupplungsscheibe auf und teilt sich mit der anderen Teilkupplung der Doppelkupplung üblicherweise eine Zentralplatte. Nachfolgend bezeichnet die Formulierung "Gegendruckplatte" sowohl Gegendruckplatten von Einfachkupplungen als auch Zentralplatten von Mehrfachkupplungen, insbesondere Doppelkupplungen.

Die Anpressplatte ist drehfest in einem Gehäuse der Kupplungsvorrichtung angeordnet und bezüglich der Gegendruckplatte in axialer Richtung begrenzt verlagerbar, während die Gegendruckplatte gehäusefest angeordnet ist. Wenn die Kupplungsscheibe zwischen der Anpressplatte und der Gegendruckplatte verspannt ist, erfolgt eine reibschlüssige Übertragung des Drehmoments von der Eingangsseite der Kupplungsvorrichtung über die Anpressplatte und die Gegendruckplatte auf die Kupplungsscheibe, und von der Kupplungsscheibe auf die Ausgangsseite der Kupplungsvorrichtung.

Vorzugsweise ist die Kupplungsvorrichtung als normal-ausgerückte Kupplungsvorrichtung ausgebildet, d.h. als Kupplung, bei der die Kupplungsscheibe im nicht betätigten Zustand der Kupplungsvorrichtung bezüglich der Gegendruckplatte und der Anpressplatte verdrehbar ist. Hierzu ist die Anpressplatte vorzugsweise durch eine oder mehrere Blattfedern von der Gegendruckplatte weiter als die Dicke der Kupplungsscheibe beabstandet, wobei die Blattfedern eine Verdrehung zwischen der Gegendruckplatte und der Anpressplatte verhindern und somit sicherstellen, dass das eingangsseitige Drehmoment von der Gegendruckplatte auf die Anpressplatte übertragen wird.

Wird die Kupplungsvorrichtung betätigt, beispielsweise durch eine Aktoreinrichtung, muss die Flaschenzugeinrichtung die Vorspannkraft der Blattfedern überwinden, um die Anpressplatte in axialer Richtung zur reibschlüssigen Klemmung der Kupplungsscheibe zwischen der Anpressplatte und der Gegendruckplatte zu verlagern. Daher wird die normal-ausgerückte Kupplungsvorrichtung üblicherweise auch als zugezogene Kupplungsvorrichtung bezeichnet. Jedoch erscheint es auch möglich, die Kupplungsvorrichtung als normal-eingerückte Kupplungsvorrichtung bzw. als aufgezogene Kupplungsvorrichtung auszubilden.

Das erste Zugmittel der Flaschenzugeinrichtung ist über anpressplattenseitige Umlenkrollen und gegendruckplattenseitige Umlenkrollen geführt. Die Formulierungen "anpressplattenseitig" und "gegendruckplattenseitig" beinhalten nicht nur eine unmittelbare Verbindung der jeweiligen Umlenkrollen an der Anpressplatte bzw. der Gegendruckplatte, sondern auch eine mittelbare Verbindung der jeweiligen Umlenkrollen mit der Anpressplatte bzw. der Gegendruckplatte. Vorzugsweise sind die Umlenkrollen drehbar aufseiten der jeweiligen Platte angeordnet. Insbesondere bei Rollen, die idealerweise keine bzw. nur eine sehr geringe Drehbewegung ausführen, kann jedoch auch eine drehfeste Anordnung aufseiten der Anpressplatte bzw. aufseiten der Gegendruckplatte vorgesehen sein.

Da die Anpressplatte in axialer Richtung der Kupplungsvorrichtung begrenzt verlagerbar ist, sind die anpressplattenseitigen Umlenkrollen vorzugsweise als (in axialer Richtung ) lose Umlenkrollen der Flaschenzugeinrichtung ausgebildet, während die gegendruckplattenseitigen Umlenkrollen als (in axialer Richtung) feste Rollen der Flaschenzugeinrichtung ausgebildet sind.

Das Zugmittel ist vorzugsweise ein biegeschlaffes Mittel zur Übertragung von Zugkräften, das aus einer oder mehreren Fasern und/oder aus einem oder mehreren Drähten besteht. Die besagten Fasern oder Drähte können miteinander in Form eines Seils verdrillt sein oder können auch miteinander in Form eines Geflechts verflochten sein. Das Geflecht kann seinerseits zylinderförmig sein, d.h. einen im Wesentlichen runden Querschnitt aufweisen, kann andererseits aber auch bandförmig sein, d.h. im Wesentlichen einen rechteckigen Querschnitt aufweisen. Unterschiedlichste abrieb- und hitzebeständige Fasern und Drähte können als Zugmittel Verwendung finden.

Das erste Zugmittel ist als in sich geschlossener Zug ausgebildet. Insbesondere ist das erste Zugmittel als Endlosseil oder Endlosdraht ausgebildet. Um montiert werden zu können, weist das erste Zugmittel vorzugsweise zumindest einen Verbindungsbereich auf, der bei oder nach der Montage, d.h. nach dem Aufziehen des Zugmittels auf die Umlenkrollen und die Zugrollen, geschlossen wird.

Vorzugsweise sind zumindest in einem Teilkreissegment der Kupplungsvorrichtung anpressplattenseitige Umlenkrollen und gegendruckplattenseitige Umlenkrollen in Umfangsrichtung der Kupplungsvorrichtung abwechselnd angeordnet. Hierdurch kann ein besonders guter Wirkungsgrad der Kupplungsvorrichtung erreicht werden.

Gemäß einem weiteren bevorzugten Ausführungsbeispiel ist die verlagerbare Zugrolle in radialer Richtung und/oder in axialer Richtung der Kupplungsvorrichtung verlagerbar, um die Kupplungsvorrichtung über das erste Zugmittel ein- und auszurücken. Dies ermöglicht eine besonders gute Anpassung der Kupplungsvorrichtung an den vorhandenen Bauraum. Um in diesem Zusammenhang den Bauraum möglichst gut zu nutzen, ist die verlagerbare Zugrolle vorzugsweise in radialer Richtung der Kupplungsvorrichtung innerhalb der Anpressplatte angeordnet. Gegebenenfalls sind hierfür zwischen der verlagerbaren Zugrolle und der nächstliegenden, plattenseitigen Umlenkrolle eine oder mehrere weitere Umlenkrollen vorgesehen, um das erste Zugmittel in geeigneter Weise umzulenken.

Gemäß einem bevorzugten Ausführungsbeispiel weist die Flaschenzugeinrichtung ein einziges erstes Zugmittel auf, das als geschlossener Zug ausgebildet ist und die gesamte Anpressplatte umläuft. Hierdurch kann die Anzahl der in der Kupplungsvorrichtung zu verbauenden Zugmittel minimiert werden.

Vorzugsweise ist das erste Zugmittel über zumindest zwei verlagerbare Zugrollen geführt. Diese zwei verlagerbaren Zugrollen sind vorzugsweise in Umfangsrichtung der Kupplungsvorrichtung gleichmäßig voneinander beabstandet. Im Falle von genau zwei verlagerbaren Zugrollen bedeutet dies, dass sie um 180° voneinander beabstandet sind, während im Falle von genau drei verlagerbaren Zugrollen dies bedeutet, dass sie jeweils im Abstand von 120° voneinander beabstandet sind, etc.

Gemäß einem weiteren bevorzugten Ausführungsbeispiel weist die Flaschenzugeinrichtung zumindest zwei erste Zugmittel auf, die jeweils als geschlossene Züge ausgebildet sind und jeweils voneinander verschiedene Teilkreissegmente der Anpressplatte umlaufen. Hierdurch ist es möglich, die ersten Zugmittel kürzer auszubilden, was für die Montage, insbesondere das Einfädeln in die Umlenkrollen, von Vorteil sein kann.

Vorzugsweise ist jedes der zumindest zwei ersten Zugmittel über jeweils zumindest eine verlagerbare Zugrolle geführt. Weiterhin vorzugsweise sind die verlagerbaren Zugrollen voneinander verschieden. Auch hier ist es von Vorteil, wenn im Falle von genau zwei verlagerbaren Zugrollen, d.h. bei genau zwei ersten Zugmitteln, die beiden Zugrollen um 180° voneinander beabstandet sind. Im Falle von drei verlagerbaren Zugrollen, d.h. bei genau drei ersten Zugmitteln, sind die verlagerbaren Zugrollen vorzugsweise jeweils um 120° voneinander beabstandet. Im Falle von vier verlagerbaren Zugrollen, d.h. bei zwei ersten Zugmitteln, die jeweils über zwei Zugrollen geführt sind, oder bei vier ersten Zugmitteln sind die verlagerbaren Zugrollen vorzugsweise jeweils um 90° voneinander beabstandet, etc.

Vorzugsweise ist zumindest eine Kraftausgleichseinrichtung zum Ausgleich unterschiedlicher Zugkräfte zwischen den zumindest zwei verlagerbaren Zugrollen vorgesehen. Sollte es bei dem genau einen Zugmittel oder bei den zwei oder mehreren Zugmitteln zu unterschiedlichen Zugkräften im Betrieb der Kupplungsvorrichtung, beispielsweise aufgrund von unterschiedlichen Reibungen, kommen, so kann durch die Kraftausgleichseinrichtung ein Ausgleich der unterschiedlichen Zugkräfte erfolgen.

Vorzugsweise weist die Kraftausgleichseinrichtung zumindest ein zweites Zugmittel auf. Das zweite Zugmittel kann offen oder geschlossen ausgebildet sein und kann eine dem ersten Zugmittel entsprechende seilförmige oder drahtförmige Beschaffenheit aufweisen. Alternativ oder zusätzlich zum zweiten Zugmittel kann die Kraftausgleichseinrichtung auch eine kardanische Aufhängung aufweisen.

Weiterhin vorzugsweise ist eine Differenzialgetriebeeinrichtung zur Verlagerung der verlagerbaren Zugrollen und/oder der Kraftausgleichseinrichtung vorgesehen. Durch die Differenzialgetriebeeinrichtung kann die für die Betätigung der Kupplungsvorrichtung, insbesondere durch die Aktoreinrichtung, aufzubringende Betätigungskraft verringert werden. Insbesondere kann hierdurch eine kleinere und leistungsschwächere Aktoreinrichtung verwendet werden. Vorzugsweise ist die Differenzialgetriebeeinrichtung als Differenzialflaschenzug ausgebildet, wie dies beispielsweise in der älteren, aber nicht vorveröffentlichten DE 10 2011 101 564.0 offenbart ist.

Die vorliegende Erfindung wird nachfolgend anhand von bevorzugten Ausführungsbeispielen in Verbindung mit den zugehörigen Figuren näher erläutert. In diesen zeigen:
- Figur 1: eine schematische Detaildarstellung eines ersten Ausführungsbeispiels einer Kupplungsvorrichtung mit einer Flaschenzugeinrichtung in einer Seitenansicht,
- Figur 2: eine schematische Darstellung des ersten Ausführungsbeispiels der Kupplungsvorrichtung in einer Draufsicht,
- Figur 3: eine schematische Darstellung eines zweiten Ausführungsbeispiels einer Kupplungsvorrichtung mit einer Flaschenzugeinrichtung in einer Draufsicht,
- Figur 4: eine schematische Darstellung eines dritten Ausführungsbeispiels einer Kupplungsvorrichtung mit einer Flaschenzugeinrichtung in einer Draufsicht, und
- Figur 5: eine schematische Darstellung eines vierten Ausführungsbeispiels einer Kupplungsvorrichtung mit einer Flaschenzugeinrichtung in einer Draufsicht.

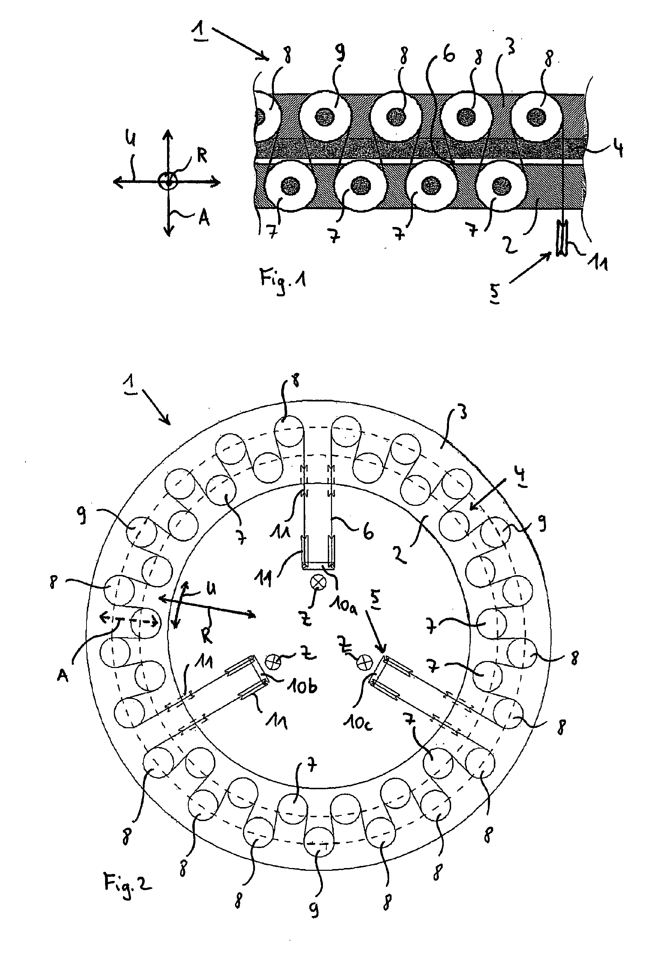

Die Figuren 1 bis 5 betreffen vier bevorzugte Ausführungsbeispiele einer Kupplungsvorrichtung 1, insbesondere einer Reibungskupplung, insbesondere für einen Antriebsstrang eines Kraftfahrzeugs. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1, die Teilkombinationen der im Folgenden zu erläuternden Merkmale aufweisen.

Zur Vereinfachung der Darstellung sind in den Figuren 2 bis 5 anpressplattenseitige Umlenkrollen 7 und gegendruckplattenseitige Umlenkrollen 8 sowie entsprechende Bereiche der Anpressplatte 2, der Gegendruckplatte 3 und der Kupplungsscheibe 4 in die Zeichenebene geklappt. Genauer gesagt sind die axialen Bereiche zwischen der Anpressplatte 2 und der Gegendruckplatte 3 in den radial äußeren Bereichen der Figuren 2 bis 5 dargestellt, was durch die gestrichelten Linien in den besagten Figuren verdeutlicht ist.

Die Figuren 1 und 2 betreffen ein erstes Ausführungsbeispiel der Kupplungsvorrichtung 1. Die Kupplungsvorrichtung 1 weist zumindest eine Anpressplatte 2, zumindest eine Gegendruckplatte 3 und zumindest eine in axialer Richtung A zwischen der Anpressplatte 2 und der Gegendruckplatte 3 angeordnete Kupplungsscheibe 4 auf. Die Gegendruckplatte 3 ist mit einem oder mehreren Gehäusebauteilen, beispielsweise einem Gehäusedeckel der Kupplungsvorrichtung 1, fest verbunden, insbesondere verschraubt.

Beispielsweise kann die Gegendruckplatte 3 als Zentralplatte einer Doppelkupplung ausgebildet sein, wobei die Zentralplatte zwei benachbarten Teilkupplungen zugeordnet ist. In axialer Richtung A auf der einen Seite der Zentralplatte weist die erste Teilkupplung eine erste Anpressplatte und eine erste Kupplungsscheibe auf, während in axialer Richtung A auf der anderen Seite der Zentralplatte die zweite Teilkupplung eine zweite Anpressplatte und eine zweite Kupplungsscheibe aufweist. Zur Vereinfachung der Beschreibung wird nachfolgend jedoch von einer Einfachkupplung ausgegangen, wobei nachfolgende Erläuterungen jedoch auch auf eine oder beide Teilkupplungen einer Doppelkupplung bzw. auf eine Mehrfachkupplung zutreffen.

In der dargestellten Einfachkupplung ist die Anpressplatte 2 im Gehäuse drehfest gelagert und in axialer Richtung A der Kupplungsvorrichtung 1 begrenzt verlagerbar. Insbesondere ist die Anpressplatte 2 mittels mehrerer nicht dargestellter Blattfedern drehfest im Gehäuse befestigt und von der Gegendruckplatte 3 weg, d.h. mit Bezug auf Figur 1 nach unten, vorgespannt.

Um die Anpressplatte 2 in axialer Richtung A der Kupplungsvorrichtung 1 zur reibschlüssigen Klemmung der Kupplungsscheibe 4 zwischen der Anpressplatte 2 und der Gegendruckplatte 3 begrenzt zu verlagern, weist die Kupplungsvorrichtung 1 zumindest eine Flaschenzugeinrichtung 5 auf. Die Flaschenzugeinrichtung 5 weist zumindest ein erstes Zugmittel 6 auf, das aus einer oder mehreren Fasern und/oder aus einem oder mehreren Drähten ausgebildet sein kann. Insbesondere kann das erste Zugmittel 6 als Zugseil oder Zugband ausgebildet sein.

Im dargestellten Ausführungsbeispiel weist die Flaschenzugeinrichtung 5 ein einziges erstes Zugmittel 6 auf, das als geschlossener Zug ausgebildet ist und die gesamte Anpressplatte 2 umläuft. Vorzugsweise weist der geschlossene Zug zumindest einen nicht dargestellten Verbindungsabschnitt auf, in dem Enden des Zugmittels 6 zumindest einmalig miteinander verbunden sind, um bei der Montage und im getrennten Zustand der Enden das Aufziehen des Zugmittels 6 auf die anpressplattenseitigen Umlenkrollen 7 und die gegendruckplattenseitigen Umlenkrollen 8 zu erleichtern. Der besagte Verbindungsabschnitt kann auch lösbar und wiederverbindbar ausgebildet sein.

Die in den Figuren 1 und 2 dargestellte Kupplungsvorrichtung 1 weist drei Teilkreissegmente auf, in denen das einzige erste Zugmittel 6 jeweils abwechselnd über anpressplattenseitige Umlenkrollen 7 und gegendruckplattenseitige Umlenkrollen 8 läuft. Die anpressplattenseitigen Umlenkrollen 7 können mittelbar oder unmittelbar mit der Anpressplatte 2 verbunden sein. Ebenso können die gegendruckplattenseitigen Umlenkrollen 8 mittelbar oder unmittelbar mit der Gegendruckplatte 3 verbunden sein. Vorzugsweise sind die Umlenkrollen 7, 8 auf Drehachsen gelagert, die sich in radialer Richtung R der Kupplungsvorrichtung 1 erstrecken.

Im dargestellten Ausführungsbeispiel deckt jedes der Teilkreissegmente, in denen die anpressplattenseitigen Umlenkrollen 7 und die gegendruckplattenseitigen Umlenkrollen 8 in Umfangsrichtung U der Kupplungsvorrichtung 1 abwechselnd angeordnet sind, im Wesentlichen einen Winkelbereich von 120° ab. Die Kupplungsvorrichtung 1 kann jedoch auch nur ein einziges Teilkreissegment, zwei Teilkreissegmente, vier Teilkreissegmente oder mehr als vier Teilkreissegmente aufweisen, die ihrerseits Winkelbereiche von im Wesentlichen 360°, 180°, 90° oder weniger als 90° abdecken.

Ferner ist im dargestellten Ausführungsbeispiel der Kupplungsvorrichtung 1 das erste Zugmittel 6 am Anfang und am Ende jedes der Teilkreissegmente jeweils über eine gegendruckplattenseitige Umlenkrolle 8 geführt. Zwischen zwei Teilkreissegmenten ist das erste Zugmittel 6 ferner über zumindest eine verlagerbare Zugrolle 10a, 10b, 10c, geführt. Hierzu sind zwischen der verlagerbaren Zugrolle 10a, 10b, 10c und der jeweils nächstgelegenen, gegendruckplattenseitigen Umlenkrolle 8 vorzugsweise eine oder mehrere weitere Umlenkrollen 11 vorgesehen, um die Zuführung zu den verlagerbaren Umlenkrollen 10a, 10b, 10c zu verbessern. In Figur 2 sind die weiteren Umlenkrollen 11 teilweise gestrichelt dargestellt. Vorzugsweise sind die weiteren Umlenkrollen 11 drehbar am Gehäuse der Kupplungsvorrichtung 1 gelagert.

Im dargestellten Ausführungsbeispiel sind die drei verlagerbaren Zugrollen 10a, 10b, 10c in radialer Richtung R der Kupplungsvorrichtung 1 innerhalb der Anpressplatte 2 angeordnet. Entsprechend den Teilkreissegmenten sind die drei verlagerbaren Zugrollen 10a, 10b, 10c jeweils im Wesentlichen um 120° voneinander beabstandet. Bei zwei Teilkreissegmenten weisen die zwei verlagerbaren Zugrollen vorzugsweise im Wesentlichen einen Abstand von 180° auf, während bei vier Teilkreissegmenten die vier verlagerbaren Zugrollen vorzugsweise jeweils im Wesentlichen einen Abstand von 90° aufweisen. Bei mehr als vier Teilkreissegmenten ist der Abstand der mehr als vier verlagerbaren Zugrollen vorzugsweise jeweils kleiner als 90°.

Im ersten Ausführungsbeispiel verläuft die Zugrichtung Z der verlagerbaren Zugrollen 10a, 10b, 10c in axialer Richtung A der Kupplungsvorrichtung, um über das erste Zugmittel 6 die Kupplungsvorrichtung 1 einzurücken bzw. durch Entspannung des ersten Zugmittels 6 und unter Vorspannung der Blattfedern die Kupplungsvorrichtung 1 auszurücken. Die in axialer Richtung A verlagerbaren Zugrollen 10a, 10b, 10c können durch eine nicht dargestellte Aktoreinrichtung verlagert werden. Die besagte Aktoreinrichtung ist vorzugsweise im Zentrum der Kupplungsvorrichtung 1 bzw. zentrumsnah angeordnet.

Wenn in allen drei Teilkreissegmenten des ersten Ausführungsbeispiels der Kupplungsvorrichtung 1 im Betrieb der Kupplungsvorrichtung 1 gleiche Zugkräfte vorliegen, drehen sich die in Umfangsrichtung U auf halber Wegstrecke der Teilkreissegmente angeordneten Umlenkrollen 9 idealerweise beim Ein- und Ausrücken der Kupplungsvorrichtung 1 nicht. Im dargestellten Ausführungsbeispiel handelt es sich bei den idealerweise nichtdrehenden Umlenkrollen 9 um gegendruckplattenseitige Umlenkrollen. Jedoch können die in Umfangsrichtung U auf halber Wegstrecke beim Ein- und Ausrücken der Kupplungsvorrichtung 1 idealerweise nichtdrehenden Umlenkrollen 9 auch als anpressplattenseitige Umlenkrollen ausgebildet sein. Zur Vereinfachung des Aufbaus ist es daher von Vorteil, wenn die besagten idealerweise nichtdrehenden Umlenkrollen 9 und ggf. auch benachbarte, beim Ein- und Ausrücken der Kupplungsvorrichtung 1 nur wenig drehende Umlenkrollen drehfest, d.h. als drehfeste Umlenkungen, beispielsweise als Bolzen, ausgebildet sind.

Ebenso drehen sich die verlagerbaren Zugrollen 10a, 10b, 10c im Falle von in den Teilkreissegmenten ausgeglichenen Zugkräfte beim Ein- und Ausrücken der Kupplungsvorrichtung 1 idealerweise nicht. Daher ist es auch möglich, die verlagerbaren Zugrollen 10a, 10b, 10c drehfest, d.h. als drehfeste Umlenkungen, beispielsweise als Bolzen, auszubilden.

Treten jedoch unterschiedliche Zugkräfte in den Teilkreissegmenten auf, beispielsweise aufgrund von Verschleiß oder Verschmutzung, kommt es beim Ausgleich der Zugkräfte über das geschlossene erste Zugmittel 6 jedoch zu einer erhöhten Reibung im Bereich der drehfesten, beispielsweise bolzenförmigen, Umlenkungen sowohl aufseiten der verlagerbaren, drehfesten Umlenkungen als auch aufseiten der gegendruckplattenseitigen und/oder anpressplattenseitigen, drehfesten Umlenkungen.

Zum Ausgleich unterschiedlicher Zugkräfte ist vorzugsweise eine Kraftausgleichseinrichtung zwischen den drei verlagerbaren Zugrollen 10a, 10b, 10c vorgesehen. Diese Kraftausgleichseinrichtung kann aktorseitig ein zweites Zugmittel aufweisen, das einer weiteren Flaschenzugeinrichtung zugeordnet ist. Alternativ oder zusätzlich kann die Kraftausgleichseinrichtung über eine kardanische Aufhängung verfügen.

Gemäß einem bevorzugten Ausführungsbeispiel ist die Aktoreinrichtung als Differenzialgetriebeeinrichtung, vorzugsweise als Differenzialflaschenzug ausgebildet, um die verlagerbaren Zugrollen 10a, 10b, 10c unmittelbar oder mittelbar, beispielsweise über die zuvor genannte Kraftausgleichseinrichtung, zu verlagern.

Im Betrieb der Kupplungsvorrichtung 1 ist bei ausgerückter Kupplung die Kupplungsscheibe 4 um die Zentralachse relativ zum Kupplungsgehäuse bzw. zur Anpressplatte 2 und zur Gegendruckplatte 3, die beide mit dem Gehäuse drehfest verbunden sind, verdrehbar. Bei eingerückter Kupplung wird ein Drehmoment von der Eingangsseite der Kupplungsvorrichtung 1, beispielsweise von einem Verbrennungsmotor eines Kraftfahrzeugs oder von einem durch den Verbrennungsmotor angetriebenen Zweimassenschwungrad über das Gehäuse und sowohl die Gegendruckplatte 3 als auch die Anpressplatte 2 reibschlüssig auf die Kupplungsscheibe 4 übertragen. Von der Kupplungsscheibe 4, die reibschlüssig zwischen der Gegendruckplatte 3 und der Anpressplatte 2 geklemmt ist, wird das Drehmoment zur Ausgangsseite der Kupplungsvorrichtung 1 übertragen, beispielsweise zu einer Eingangsseite eines Getriebes.

Da aufgrund des Reibschlusses sowohl die Reibflächen der Gegendruckplatte 3 und der Anpressplatte 2 als auch die Reibbeläge der Kupplungsscheibe 4 einem Verschleiß unterworfen sind, muss über die Lebensdauer der Kupplungsvorrichtung 1 die Anpressplatte 2 immer näher an die Gegendruckplatte 3 heranbewegt werden, um die Abnahme der Stärke der Reibflächen und der Dicke der Reibbeläge in axialer Richtung A zu kompensieren und den Reibschluss herstellen bzw. die Kupplungsvorrichtung 1 durch Zuziehen der Flaschenzugeinrichtung 5 einrücken zu können. Hierzu ist aktorseitig vorzugsweise eine Verschleißnachstellung vorgesehen, wobei die Aktoreinrichtung beim Zuziehen der Kupplungsvorrichtung im Verschleißfall weiter verfahren werden kann, um zusätzliches Zugmittel einziehen zu können, so dass die Anpressplatte 2 näher an die Gegendruckplatte 3 heranbewegt werden kann.

Um Wiederholungen zu vermeiden, wird bei der Beschreibung der folgenden Ausführungsbeispiele nur auf die Unterschiede zum ersten Ausführungsbeispiel der Kupplungsvorrichtung 1 bzw. zu den vorangegangenen Ausführungsbeispielen der Kupplungsvorrichtung 1 eingegangen. Gleiche Bezugszeichen in den zugehörigen Figuren entsprechen gleichen Merkmalen der Ausführungsbeispiele.

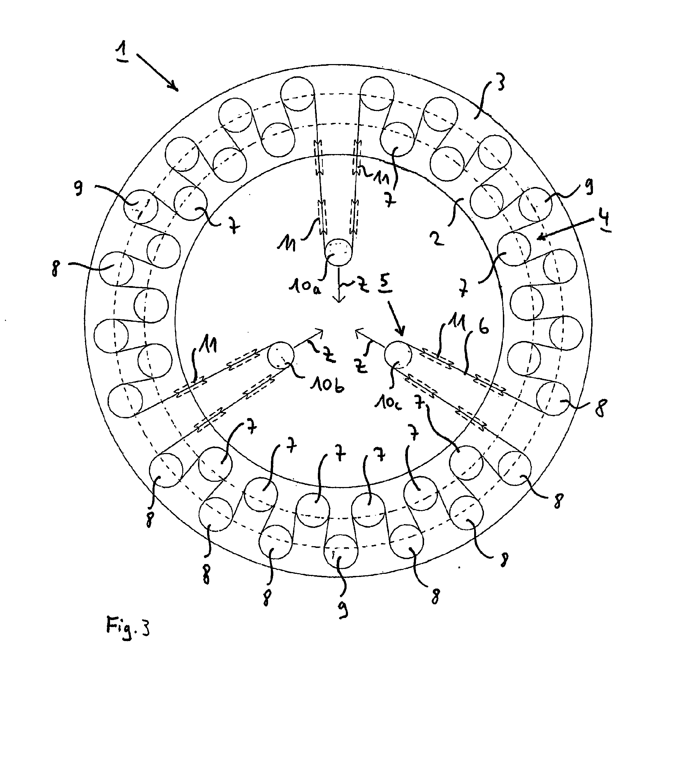

Das in Figur 3 dargestellte zweite Ausführungsbeispiel der Kupplungsvorrichtung 1 unterscheidet sich vom ersten Ausführungsbeispiel der Kupplungsvorrichtung 1 lediglich durch die Zugrichtung Z der drei verlagerbaren Zugrollen 10a, 10b, 10c. Im zweiten Ausführungsbeispiel sind die Zugrollen 10a, 10b, 10c in radialer Richtung R der Kupplungsvorrichtung 1 durch die Aktoreinrichtung verlagerbar, um die Kupplungsvorrichtung 1 über das erste Zugmittel 6 einzurücken, d.h. zuzuziehen bzw. unter Entspannung des ersten Zugmittels 6 und unter Vorspannung der Blattfedern auszurücken. Gleichermaßen kann auch hierbei eine Kraftausgleichseinrichtung zum Ausgleich unterschiedlicher Zugkräfte zwischen den verlagerbaren Zugrollen 10a, 10b, 10c zum Einsatz kommen. Ebenso ist es von Vorteil, wenn die Aktoreinrichtung als Differenzialgetriebeeinrichtung, vorzugsweise als Differenzialflaschenzug, ausgebildet ist.

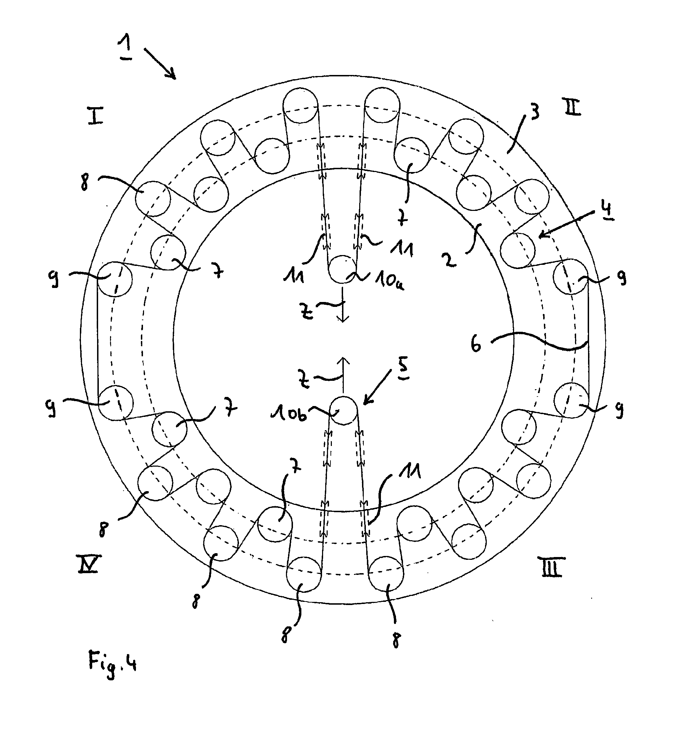

Das in Figur 4 dargestellte dritte Ausführungsbeispiel der Kupplungsvorrichtung 1 unterscheidet sich vom zweiten Ausführungsbeispiel der Kupplungsvorrichtung 1 dadurch, dass das einzige, als geschlossener Zug ausgebildete erste Zugmittel 6 lediglich über zwei verlagerbare Zugrollen 10a, 10b geführt ist. Zwar sind im dargestellten Ausführungsbeispiel die beiden Zugrollen 10a, 10b in radialer Richtung R durch die Aktoreinrichtung verlagerbar, können jedoch auch in axialer Richtung A durch die Aktoreinrichtung verlagerbar sein. Beide Umlenkrollen 10a, 10b sind um 180° voneinander beabstandet.

Ferner unterscheidet sich das dritte Ausführungsbeispiel der Kupplungsvorrichtung 1 von den vorangegangenen Ausführungsbeispielen dadurch, dass insgesamt vier Teilkreissegmente vorgesehen sind, in denen jeweils anpressplattenseitige Umlenkrollen 7 und gegendruckplattenseitige Umlenkrollen 8 abwechselnd angeordnet sind, und die jeweils einen Winkelbereich von im Wesentlichen 90° abdecken. Im Uhrzeigersinn sind zwischen den Teilkreissegmenten I und II und den Teilkreissegmenten III und IV jeweils die verlagerbaren Zugrollen 10a; 10b angeordnet.

Zwischen den Teilkreissegmenten II und III bzw. zwischen den Teilkreissegmenten IV und I sind keine Zugrollen angeordnet, sodass in diesem Bereich das erste Zugmittel 6 jeweils über zwei direkt aufeinanderfolgende, gegendruckplattenseitige Umlenkrollen 8 geführt ist. Bei gleichmäßigen Zugkräften in den Teilkreissegmenten handelt es sich bei den besagten Umlenkrollen um beim Ein- und Ausrücken der Kupplungsvorrichtung 1 idealerweise nichtdrehende Umlenkrollen 9. Jedoch ist es auch möglich, in diesen Bereichen zusätzlich eine anpressplattenseitige Umlenkrolle 7 vorzusehen, sodass dann nur zwei Teilkreissegmente, die jeweils einen Winkelbereich von im Wesentlichen 180° abdecken, vorgesehen sind.

Auch andere Kombinationen, insbesondere gradzahlige, Kombinationen von unterschiedlichen Anzahlen verlagerbarer Zugrollen und unterschiedlichen Anzahlen von Teilkreissegmenten, in denen anpressplattenseitige Umlenkrollen 7 und gegendruckplattenseitige Umlenkrollen 8 abwechselnd angeordnet sind, sind möglich.

Für die Verlagerung der verlagerbaren Zugrollen 10a, 10b in radialer Richtung R und/oder axialer Richtung A der Kupplungsvorrichtung 1 für die Aktoreinrichtung und die vorzugsweise vorgesehene Kraftausgleichseinrichtung gilt das bereits zuvor Gesagte.

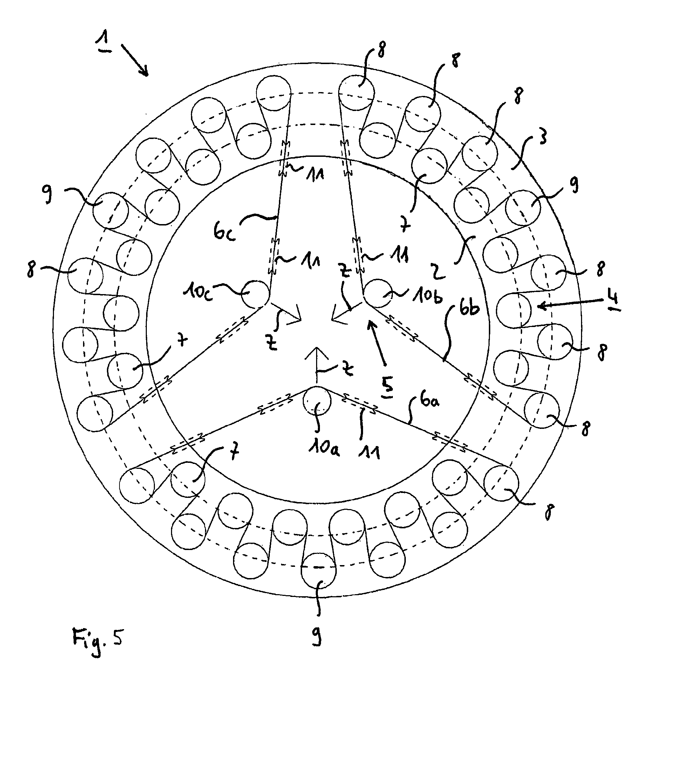

In Figur 5 ist ein viertes Ausführungsbeispiel der Kupplungsvorrichtung 1 dargestellt. Im Unterschied zu den vorangegangenen Ausführungsbeispielen weist die Flaschenzugeinrichtung 5 im vierten Ausführungsbeispiel der Kupplungsvorrichtung 1 drei erste Zugmittel 6a, 6b, 6c auf, die jeweils als geschlossene Züge ausgebildet sind.

Die als geschlossene Züge ausgebildeten ersten Zugmittel 6a, 6b, 6c umlaufen jeweils voneinander verschiedene Teilkreissegmente der Anpressplatte 2. Im dargestellten Ausführungsbeispiel umfasst jedes der Teilkreissegmente im Wesentlichen einen Winkelbereich von 120°. Bei zwei ersten Zugmitteln umfasst der Winkelbereich im Wesentlichen 180°, bei vier ersten Zugmitteln im Wesentlichen 90° und bei mehr als vier ersten Zugmitteln weniger als 90°.

Jedes der ersten Zugmittel 6a, 6b, 6c ist über eine in radialer Richtung R und/oder axialer Richtung A der Kupplungsvorrichtung 1 verlagerbare Zugrolle 10 a, 10 b, 10 c geführt. Für die Verlagerung der verlagerbaren Zugrollen 10a, 10b in radialer Richtung R und/oder axialer Richtung A der Kupplungsvorrichtung 1 für die Aktoreinrichtung und die vorzugsweise vorgesehene Kraftausgleichseinrichtung gilt das bereits zuvor Gesagte.

Vorzugsweise sind die verlagerbaren Zugrollen 10a, 10b, 10c voneinander verschieden, d.h. weisen insbesondere vorzugsweise Drehachsen auf, die voneinander verschieden sind.

Die in Umfangsrichtung U auf halber Wegstrecke des jeweiligen Teilkreissegments angeordnete, bei gleichmäßigen Zugkräften beim Ein- und Ausrücken der Kupplungsvorrichtung 1 idealerweise nichtdrehende Umlenkrolle 9 ist vorzugsweise im gleichen, durch den entsprechenden Radialstrahl definierten Querschnitt angeordnet wie die entsprechende verlagerbare Zugrolle 10a, 10b, 10c, die dem jeweiligen ersten Zugmittel 6a, 6b, 6c zugeordnet ist.

Die vorangegangenen Ausführungsbeispiele betreffen eine Kupplungsvorrichtung 1, insbesondere eine Reibungskupplung, insbesondere für einen Antriebsstrang eines Kraftfahrzeugs, mit einer Gegendruckplatte 3 und einer durch zumindest eine Flaschenzugeinrichtung 5 in axialer Richtung A der Kupplungsvorrichtung 1 begrenzt verlagerbare Anpressplatte 2 zur reibschlüssigen Klemmung einer Kupplungsscheibe 4 zwischen der Anpressplatte 2 und der Gegendruckplatte 3, wobei die Flaschenzugeinrichtung 5 zumindest ein erstes Zugmittel 6, 6a, 6b, 6c aufweist, das über zumindest eine anpressplattenseitige Umlenkrolle 7, zumindest eine gegendruckplattenseitige Umlenkrolle 8, 9 und zumindest eine verlagerbare Zugrolle 10a, 10b, 10c geführt ist, und das als geschlossener Zug ausgebildet ist.

### Bezugszeichenliste

- 1: Kupplungsvorrichtung
- 2: Anpressplatte
- 3: Gegendruckplatte
- 4: Kupplungsscheibe
- 5: Flaschenzugeinrichtung
- 6: erstes Zugmittel
- 6a: erstes Zugmittel
- 6b: erstes Zugmittel
- 6c: erstes Zugmittel
- 7: anpressplattenseitige Umlenkrolle
- 8: gegendruckplattenseitige Umlenkrolle
- 9: idealerweise nichtdrehende Umlenkrolle
- 10a: Zugrolle
- 10b: Zugrolle
- 10c: Zugrolle
- 11: weitere Umlenkrolle
- A: axiale Richtung
- R: radiale Richtung
- U: Umfangsrichtung
- Z: Zugrichtung

## Patentansprüche

1. Kupplungsvorrichtung (1), insbesondere Reibungskupplung, insbesondere für einen Antriebsstrang eines Kraftfahrzeugs, mit einer Gegendruckplatte (3) und einer durch zumindest eine Flaschenzugeinrichtung (5) in axialer Richtung (A) der Kupplungsvorrichtung (1) begrenzt verlagerbaren Anpressplatte (2) zur reibschlüssigen Klemmung einer Kupplungsscheibe (4) zwischen der Anpressplatte (2) und der Gegendruckplatte (3), wobei die Flaschenzugeinrichtung (5) zumindest ein erstes Zugmittel (6, 6a, 6b, 6c) aufweist, das über zumindest eine anpressplattenseitige Umlenkrolle (7), und zumindest eine gegendruckplattenseitige Umlenkrolle (8, 9) geführt ist,
**dadurch gekennzeichnet, dass** das erste Zugmittel (6, 6a,6b, 6c) weiter über zumindest eine verlagerbare Zugrolle (10a, 10b, 10c) geführt ist, und als geschlossener Zug ausgebildet ist.

2. Kupplungsvorrichtung (1) nach Anspruch 1, wobei zumindest in einem Teilkreissegment der Kupplungsvorrichtung (1) anpressplattenseitige Umlenkrollen (7) und gegendruckplattenseitige Umlenkrollen (8) in Umfangsrichtung (U) der Kupplungsvorrichtung (1) abwechselnd angeordnet sind.

3. Kupplungsvorrichtung (1) nach Anspruch 1 oder 2, wobei die verlagerbare Zugrolle (10a, 10b, 10c), die vorzugsweise in radialer Richtung (R) der Kupplungsvorrichtung (1) innerhalb der Anpressplatte (2) angeordnet ist, in radialer Richtung (R) und/oder in axialer Richtung (A) der Kupplungsvorrichtung (1) verlagerbar ist, um die Kupplungsvorrichtung (1) über das erste Zugmittel (6, 6a, 6b, 6c) ein- und auszurücken.

4. Kupplungsvorrichtung (1) nach zumindest einem der Ansprüche 1 bis 3, wobei die Flaschenzugeinrichtung (5) ein einziges erstes Zugmittel (6) aufweist, das als geschlossener Zug ausgebildet ist und die gesamte Anpressplatte (2) umläuft.

5. Kupplungsvorrichtung (1) nach Anspruch 4, wobei das erste Zugmittel (6) über zumindest zwei verlagerbare Zugrollen (10a, 10b, 10c) geführt ist.

6. Kupplungsvorrichtung (1) nach zumindest einem der Ansprüche 1 bis 3, wobei die Flaschenzugeinrichtung (5) zumindest zwei erste Zugmittel (6a, 6b, 6c) aufweist, die jeweils als geschlossene Züge ausgebildet sind und jeweils voneinander verschiedene Teilkreissegmente der Anpressplatte (2) umlaufen.

7. Kupplungsvorrichtung (1) nach Anspruch 6, wobei jedes der zumindest zwei ersten Zugmittel (6a, 6b, 6c) über jeweils zumindest eine verlagerbare Zugrolle (10a, 10b, 10c) geführt ist, und die verlagerbaren Zugrollen (10a, 10b, 10c) vorzugsweise voneinander verschieden sind.

8. Kupplungsvorrichtung (1) nach zumindest einem der Ansprüche 5 bis 7, wobei zumindest eine Kraftausgleichseinrichtung zum Ausgleich unterschiedlicher Zugkräfte zwischen den zumindest zwei verlagerbaren Zugrollen (10a, 10b, 10c) vorgesehen ist.

9. Kupplungsvorrichtung (1) nach Anspruch 8, wobei die Kraftausgleichseinrichtung zumindest ein zweites Zugmittel und/oder eine kardanische Aufhängung aufweist.

10. Kupplungsvorrichtung (1) nach zumindest einem der Ansprüche 1 bis 9, wobei eine Differenzialgetriebeeinrichtung, vorzugsweise ein Differenzialflaschenzug, zur Verlagerung der verlagerbaren Zugrollen (10a, 10b, 10c) und/oder der Kraftausgleichseinrichtung vorgesehen ist.

## Claims

1. Clutch apparatus (1), in particular friction clutch, in particular for a drivetrain of a motor vehicle, having a counterpart thrust plate (3) and having a pressure plate (2) which can be displaced to a limited extent in an axial direction (A) of the clutch apparatus (1) by way of at least one pulley device (5) and which serves for clamping a clutch disc (4) in frictionally engaging fashion between the pressure plate (2) and the counterpart thrust plate (3), wherein the pulley device (5) has at least one first traction mechanism (6, 6a, 6b, 6c) which is guided over at least one pressure plate-side diverting roller (7) and at least one counterpart thrust plate-side diverting roller (8, 9), **characterized in that** the first traction mechanism (6, 6a, 6b, 6c) is furthermore guided over at least one displaceable tensioning roller (10a, 10b, 10c) and is in the form of a closed cable.

2. Clutch apparatus (1) according to Claim 1, wherein, at least in a pitch circular segment of the clutch apparatus (1), pressure plate-side diverting rollers (7) and counterpart thrust plate-side diverting rollers (8) are arranged so as to alternate in a circumferential direction (U) of the clutch apparatus (1).

3. Clutch apparatus (1) according to Claim 1 or 2, wherein the displaceable tensioning roller (10a, 10b, 10c), which is preferably arranged to the inside of the pressure plate (2) in a radial direction (R) of the clutch apparatus (1) is displaceable in the radial direction (R) and/or in the axial direction (A) of the clutch apparatus (1) for the purposes of engaging and disengaging the clutch apparatus (1) by way of the first traction mechanism (6, 6a, 6b, 6c).

4. Clutch apparatus (1) according to at least one of Claims 1 to 3, wherein the pulley device (5) has a single first traction mechanism (6) which is in the form of a closed cable and which runs around the entire pressure plate (2).

5. Clutch apparatus (1) according to Claim 4, wherein the first traction mechanism (6) is guided over at least two displaceable tensioning rollers (10a, 10b, 10c).

6. Clutch apparatus (1) according to at least one of Claims 1 to 3, wherein the pulley device (5) has at least two first traction mechanisms (6a, 6b, 6c) which are each in the form of closed cables and which each run around mutually different pitch circular segments of the pressure plate (2).

7. Clutch apparatus (1) according to Claim 6, wherein each of the at least two first traction mechanisms (6a, 6b, 6c) is guided over in each case at least one displaceable tensioning roller (10a, 10b, 10c), and the displaceable tensioning rollers (10a, 10b, 10c) preferably differ from one another.

8. Clutch apparatus (1) according to at least one of Claims 5 to 7, wherein at least one force equalization device is provided for equalizing different tensile forces among the at least two displaceable tensioning rollers (10a, 10b, 10c).

9. Clutch apparatus (1) according to Claim 8, wherein the force equalization device has at least one second traction mechanism and/or a cardanic mounting.

10. Clutch apparatus (1) according to at least one of Claims 1 to 9, wherein a differential gear mechanism, preferably a differential pulley system, is provided for the displacement of the displaceable tensioning rollers (10a, 10b, 10c) and/or of the force equalization device.

## Revendications

1. Dispositif d'embrayage (1), en particulier embrayage à friction, en particulier pour une chaîne cinématique d'un véhicule automobile, comprenant une plaque de contrepression (3) et une plaque de pressage (2) déplaçable de manière limitée dans la direction axiale (A) du dispositif d'embrayage (1) par au moins un dispositif à palan (5) en vue du serrage par engagement par friction d'un disque d'embrayage (4) entre la plaque de pressage (2) et la plaque de contrepression (3), le dispositif à palan (5) présentant au moins un premier moyen de traction (6, 6a, 6b, 6c) qui est guidé par le biais d'au moins une poulie de renvoi (7) du côté de la plaque de pressage et d'au moins une poulie de renvoi (8, 9) du côté de la plaque de contrepression, **caractérisé en ce que** le premier moyen de traction (6, 6a, 6b, 6c) est en outre guidé par le biais d'au moins une poulie de traction déplaçable (10a, 10b, 10c) et est réalisé sous forme de moyen de traction fermé.

2. Dispositif d'embrayage (1) selon la revendication 1, dans lequel au moins dans un segment de cercle partiel du dispositif d'embrayage (1), des poulies de renvoi (7) du côté de la plaque de pressage et des poulies de renvoi (8) du côté de la plaque de contrepression sont disposées en alternance dans la direction périphérique (U) du dispositif d'embrayage (1).

3. Dispositif d'embrayage (1) selon la revendication 1 ou 2, dans lequel la poulie de traction déplaçable (10a, 10b, 10c), qui est disposée de préférence dans la direction radiale (R) du dispositif d'embrayage (1) à l'intérieur de la plaque de pressage (2), peut être déplacée dans la direction radiale (R) et/ou dans la direction axiale (A) du dispositif d'embrayage (1), afin d'embrayer et de débrayer le dispositif d'embrayage (1) par le biais du premier moyen de traction (6, 6a, 6b, 6c).

4. Dispositif d'embrayage (1) selon au moins l'une quelconque des revendications 1 à 3, dans lequel le dispositif à palan (5) présente un premier moyen de traction unique (6) qui est réalisé sous forme de moyen de traction fermé et qui circule autour de toute la plaque de pressage (2).

5. Dispositif d'embrayage (1) selon la revendication 4, dans lequel le premier moyen de traction (6) est guidé sur au moins deux poulies de traction déplaçables (10a, 10b, 10c).

6. Dispositif d'embrayage (1) selon au moins l'une quelconque des revendications 1 à 3, dans lequel le dispositif à palan (5) présente au moins deux premiers moyens de traction (6a, 6b, 6c) qui sont réalisés à chaque fois sous forme de moyens de traction fermés et qui circulent à chaque fois autour de segments de cercle partiel différents les uns des autres de la plaque de pressage (2).

7. Dispositif d'embrayage (1) selon la revendication 6, dans lequel chacun des au moins deux premiers moyens de traction (6a, 6b, 6c) est guidé par le biais d'au moins une poulie de traction déplaçable respective (10a, 10b, 10c) et les poulies de traction déplaçables (10a, 10b, 10c) sont de préférence différentes les unes des autres.

8. Dispositif d'embrayage (1) selon au moins l'une quelconque des revendications 5 à 7, dans lequel au moins un dispositif d'équilibrage de forces pour équilibrer des forces de traction différentes est prévu entre les au moins deux poulies de traction déplaçables (10a, 10b, 10c).

9. Dispositif d'embrayage (1) selon la revendication 8, dans lequel le dispositif d'équilibrage de forces présente au moins un deuxième moyen de traction et/ou une suspension à la cardan.

10. Dispositif d'embrayage (1) selon au moins l'une quelconque des revendications 1 à 9, dans lequel un dispositif de transmission différentielle, de préférence un palan différentiel, est prévu pour le déplacement des poulies de traction déplaçables (10a, 10b, 10c) et/ou du dispositif d'équilibrage de forces.
